# EUROPEAN PATENT APPLICATION

(11) **EP 2 554 527 A1**
(43) Date of publication of application: **06.02.2013**
(21) Application number: 11762459.3
(22) Date of filing: 02.03.2011
(51) Int. Cl.: C04B 41/84, C04B 35/80, C04B 35/84

(54) **CERAMIC MATERIAL COATED WITH SiC AND HAVING SiC FIBERS BOUND THERETO**

(30) Priority: 31.03.2010 JP 2010080816
(71) Applicant: UBE INDUSTRIES, LTD., Ube-shi Yamaguchi 755-8633 (JP)
(72) Inventor: MATSUNAGA, Kenji, Ube-shi Yamaguchi 755-8633 (JP); KODAMA, Tsutomu, Ube-shi Yamaguchi 755-8633 (JP); TANAKA, Hisao, Ube-shi Yamaguchi 755-8633 (JP); KAJII, Shinji, Ube-shi Yamaguchi 755-8633 (JP)
(74) Representative: Grünecker, Kinkeldey, Stockmair & Schwanhäusser
(86) International application number: PCT/JP2011/054791
(87) International publication number: WO 2011/122219

(57) **Abstract**

Disclosed is to provide a material which can withstand rapid increase in temperature to 1600°C or more and exhibits little change in properties even in a high-speed combustion gas stream. Specifically disclosed is a SiC fiber-bonded ceramic coated with SiC, which is characterized by being produced by coating the surface of a SiC fiber-bonded ceramic with use of a coating layer including mainly SiC, wherein the SiC fiber-bonded ceramic includes inorganic fibers having a sintered SiC structure, each of which contains 0.01 to 1 wt% of oxygen (O) and at least one or more metal atoms of metal atoms in Groups 2A, 3A, and 3B and a 1-100 nm interfacial layer containing carbon (C) as a main component formed between the fibers.

## Description

### Technical Field

The present invention relates to a SiC fiber-bonded ceramic coated with SiC which is excellent in thermal shock resistance, and oxidation resistance as well as corrosion resistance at high temperatures.

### Background Art

Since silicon carbide fiber-reinforced silicon carbide ceramic composite materials (SiC/SiC composite materials) and SiC fiber-bonded ceramics are excellent in high toughness and heat resistance, application of such materials to heat resistant structural components such as nose tip and combustor nozzle of space shuttle has been investigated. Particularly, it is presumed that application of such a SiC fiber-bonded ceramic even to sites where airtight is needed is easy because it is dense and does not require the process of sealing the voids. However, when a silicon carbide material is exposed to a high-speed combustion gas stream at a high temperature of 1600°C or more, the structural components become thinner due to the evaporation of the silicon oxide layer formed as a surface protective layer, or due to the scattering of the surface protective layer or the surface fiber as a result of erosion by a high speed gas. For this reason, these materials are not necessarily sufficiently satisfactory in oxidation resistance and corrosion resistance under a severe environment that reaches rapidly high temperatures of 1600°C or more and is exposed to a high-speed combustion gas stream. Thus, these materials have a problem of the lack of durability and reliability as structural components.

In order to improve such problems, a technique to coat SiC/SiC composite materials as well as SiC fiber-bonded ceramics with an oxide material having an excellent oxidation resistance has been developed. For example, in Patent Literature 1, there has been proposed an environmental barrier coating of a SiC fiber-reinforced ceramic composite material, which is obtained by forming, on the surface layer of a SiC/SiC composite material, an intermediate layer including a layer impregnated with a mixture of a crystallized glass (BMAS) including BaO-MgO-Al₂O₃-SiO₂ and a rare earth silicate, and a CVD-SiC layer obtained by impregnating a SiC layer deposited so as to be the porous one on the surface of the base material by a CVD process with a mixture of BMAS and a rare earth silicate, and further forming a rare earth silicate layer on the CVD-SiC layer as a top coat. By introducing the CVD-SiC layer, the SiC fiber-reinforced ceramic composite material obtained in Patent Literature 1 has improved the non-uniformity in the wettability of the intermediate layer and the top coat components during treatment at high temperatures and resulted in forming a coating with a uniform thickness. The top coat is formed by rare earth silicates excellent in water vapor resistance and has an intermediate layer filled with crystallized glass which is flexible at room temperature and softens at high temperatures, between the top coat and the base material. Therefore due to the suppression of propagating of the topcoat crack to the base material, it is said that a high heat resistance and a damage tolerance of the SiC fiber-reinforced ceramics even under a high-temperature water vapor atmosphere are exerted.

On the other hand, in Patent Literature 2, there has been proposed a ceramic composite material characterized in that a surface layer of a sintered SiC fiber-bonded material containing a rare earth oxide as a main ingredient is constituted by a first layer including at least one kind of a rare earth oxide represented by the general formula: RE₂Si₂O₇ or RE₂SiO₅ (RE in the formula represents a rare earth metal element selected from the group including Y, Yb, Er, Ho, and Dy), and a second layer including an eutectic crystal composed of combination of two or more metal oxides and containing at least one kind of a rare earth element, or at least one kind of a rare earth oxide represented by the general formula: RE₃Al₅O₁₂ or REAlO₃ (RE in the formula represents a rare earth metal element selected from the group including Y, Yb, Er, Ho, Dy, Gd, Sm, Nd, Lu). According to Patent Literature 2, the sintered SiC fiber-bonded material coated with a layer including mainly a rare earth oxide on the surface was placed in an electric furnace which was kept at 1700°C in the air, and subjected to a heat treatment for 100 hours, after which time changes in weight and strength of such coated material were examined and it was revealed that there was no change in characteristics even after rapid increase in temperature to 1700°C.

### Citation List

### Patent Literatures

Patent Literature 1: Japanese Patent Application Laid-Open (JP-A) No. 2006-143553
Patent Literature 2: JP-A No. 2002-104892

### Summary of Invention

### Technical Problem

However, characteristics of those described in Patent Literature 1 are not sufficient under the condition of rapid increase in temperature to more than 1600°C or in a high-speed combustion gas stream, and characteristics of those described in Patent Literature 2 are not sufficient in a high-speed combustion gas stream. Accordingly, the present invention is intended to provide a material which withstands rapid increase in temperature to a temperature of 1600°C or more and has few changes of characteristics even in a high-speed combustion gas stream.

### Solution to Problem

As a result of intensive studies in order to achieve the purpose described above, the present inventors have found that by coating the surface of a SiC fiber-bonded ceramic with a coating layer including mainly SiC, the coated product becomes resistant to rapid increase in temperature to 1600°C or more and can reduce characteristic changes even in a high-speed combustion gas stream. Namely, the present invention relates to a SiC fiber-bonded ceramic coated with SiC, which is characterized by being obtained by coating the surface of a SiC fiber-bonded ceramic with use of a coating layer including mainly SiC, the SiC fiber-bonded ceramic including inorganic fibers having mainly a sintered SiC structure, each of which contains 0.01-1 wt.% of oxygen (O) and at least one or more metal atoms of metal atoms in Groups 2A, 3A, and 3B, and a 1-100 nm interfacial layer containing carbon (C) as a main component formed between the fibers, or a SiC fiber-bonded ceramic coated with SiC including: a matrix including inorganic fibers mainly having a sintered SiC structure, each of which contains 0.01-1 wt.% of oxygen (O) and at least one or more metal atoms of metal atoms in Groups 2A, 3A, and 3B, and a 1-100 nm interfacial layer containing carbon (C) as a main component formed between the fibers; a surface portion having a ceramic structure that contains mainly SiC and is formed on at least a part of the surface of the matrix; and a boundary portion interposed between the surface portion and the matrix and having a graded structure that changes from the structure of the matrix to the structure of the surface portion gradually and continuously, which is characterized in that the surface of the SiC fiber-bonded ceramic is coated with a coating layer including mainly SiC.

### Advantageous Effects of Invention

As described above, a material that is resistant to rapid increase in temperature to 1600°C or more and can reduce characteristic changes even in a high-speed combustion gas stream can be provided according to the present invention.

### Brief Description of Drawings

Fig. 1 is an optical micrograph of the surface of a SiC fiber-bonded ceramic coated with SiC, obtained in Example 1.
Fig. 2 is a scanning electron microscope photograph of a cross section of the surface of a SiC fiber-bonded ceramic coated with SiC, obtained in Example 1.
Fig. 3 is a photograph of each surface of a SiC fiber-bonded ceramic coated with SiC, obtained in Example 1, and an uncoated SiC fiber-bonded ceramic after the erosion test.

### Description of Embodiments

At the initial stage of development, it was thought by the inventors of the present invention that a method for coating the surface of a SiC fiber-bonded ceramic with an oxide coating was the best way in order not to degrade components of such ceramics in a high-speed combustion gas stream as shown in the Patent Literatures 1 and 2 described above. In particular, in the SiC fiber-bonded ceramics, it was thought that there is no major advancement even if coating is applied thereto with the same SiC because such ceramic is constructed by dense SiC materials. However, as a result of intensive studies, a SiC fiber-bonded ceramic coated with SiC has been successfully discovered by coating the surface of the SiC fiber-bonded ceramic with SiC, wherein there is no peeling of the coating layer even in rapid increase in temperature to 1600°C or more and any traces of the gas stream are not visible with the naked eye in a high-speed combustion gas stream. More specifically, the traces of the gas stream cannot be confirmed with the naked eye even after the ceramic was maintained for 200 seconds at a heating rate of 2. 6 MW/m², and the weight loss rate is preferably 1% by weight or less.

The SiC fiber-bonded ceramic coated with SiC according to the present invention is one obtained by coating uniformly the surface of a SiC fiber-bonded ceramic with a coating layer including mainly SiC. The SiC coating can be formed by a thin film forming method which is generally used, including a thermal spraying method, a sputtering method, and a chemical vapor deposition method (CVD method), but the CVD method is preferable because it can coat a complicated shape with a homogeneous and high purity SiC. It is preferable that the purity of SiC to be coated is high, but the degree of the purity of SiC if it is formed by the CVD method is generally allowable. However, in the generation of SiC by the reaction of a metallic Si with carbon according to the reaction sintering method, the metallic Si must not remain. Because the metallic Si melts at a temperature of 1600°C or more, this becomes the cause that the SiC coating layer is peeled off by a high-speed combustion gas stream at high temperatures. The CVD method is commonly carried out at 1000°C to 1500°C using silane (SiH₄) and propane (C₃H₈) as a source gas and hydrogen (H₂) as a carrier gas, but the source gas is not particularly limited so long as it enables to form a uniform film.

Moreover, as for the shape of a thin film formed as a coating layer, it is desirable that a surface roughness after the coating with SiC is equal to or less than Rmax = 10 µm and a variation in film thickness of a coating layer including SiC is equal to or less than 50 µm, without grinding chemically (etching processing etc.) and physically. The advantages of the present invention when compared to those described in the Patent Literatures 1 and 2, and the like reside in that there is no need for an undercoat to suppress the difference of the thermal expansion coefficient because the SiC fiber-bonded ceramic and the coating material are the same SiC-based materials.

As the SiC fiber-bonded ceramic to be coated with a coating layer including SiC in the present invention, there are mentioned:
(A) a SiC fiber-bonded ceramic including;
   inorganic fibers having mainly a sintered SiC structure, each of which contains 0.01-1 wt.% of oxygen (O) and at least one or more metal atoms of metal atoms in Groups 2A, 3A, and 3B, and a 1-100 nm interfacial layer containing carbon (C) as a main component formed between the fibers; and
(B) a SiC fiber-bonded ceramic having a graded structure, including;
   a matrix, the matrix including inorganic fibers having mainly a sintered SiC structure containing 0.01-1 wt.% of oxygen (O) and at least one or more metal atoms of metal atoms in Groups 2A, 3A, and 3B, and a 1-100 nm interfacial layer containing carbon (C) as a main component formed between the fibers;
   a surface portion having a ceramic structure including mainly SiC and being formed on at least part of the surface of the matrix; and
   a boundary portion interposed between the surface portion and the matrix and having a graded structure that changes from the structure of the matrix to the structure of the surface portion gradually and continuously.

Such SiC fiber-bonded ceramic is a ceramic material including a volume fraction of 90% or more of SiC-based fibers, rather than a ceramic material containing a SiC matrix almost comparable to a fiber volume fraction between reinforced SiC fibers like SiC/SiC composite materials. However, unlike the monolithic SiC ceramic, such a material has high fracture toughness, is insensitive to defect, and is a material showing a non-linear fracture like the SiC/SiC composite materials without exhibiting brittle fracture morphology like the monolithic SiC ceramic. That is, crack occurred in the process of applying a load shows a non-linear behavior of the relationship between the applied load and deformation strain due to the crack deflection to change the direction at the boundary of fibers. Specifically, the fiber material constituting the SiC fiber-bonded ceramic is mainly inorganic fibers that include a sintering structure containing mainly SiC, contain 0.01-1 wt.% of oxygen (O) and at least one metal atom selected from the group including metal atoms in Groups 2A, 3A, and 3B, and are bonded very close to the closest-packed structure.

The inorganic fibers including a sintered SiC structure include mainly a sintered polycrystalline β-SiC structure, or include crystalline particulates of β-SiC and C. In a region containing a fine crystal of carbon (C) and/or an extremely small amount of oxygen (O), where β-SiC crystal grains sinter together without grain boundary second phase interposed therebetween, a strong bond between SiC crystals can be obtained. If fracture occurs in the fibers, it proceeds within crystal grains of SiC in at least 30% or more of the region. Depending on the case, an intergranular fracture region between SiC crystals and an intragranular fracture region may be present in mixture.

The inorganic fibers described above contain at least one metal atom selected from the group including metal elements in Groups 2A, 3A, and 3B. The elements contained in the inorganic fibers are normally present in the proportion of Si: 55-70 wt.%, C: 30-45 wt.%, O: 0.01-1 wt.%, and M (a metal element in Groups 2A, 3A, and 3B): 0.05-4.0 wt.%, preferably 0.1-2.0 wt.%. Particularly preferable metal elements among the metal elements in Groups 2A, 3A, and 3B are Be, Mg, Y, Ce, B, and Al. These are all known as sintering aids for SiC and present in the form of chelate compounds and alkoxide compounds capable of reacting with an Si-H bond in an organosilicon polymer. If the proportion of the metal is excessively low, the inorganic fiber material cannot obtain sufficient crystallinity. If the proportion is excessively high, the intergranular fracture increases, resulting in a reduction in mechanical properties.

All or most of the inorganic fibers described above are deformed in the shape of polygons and bonded together in a structure extremely proximate to the closest packing. In an interfacial area between the fibers, a 1-50 nm interfacial layer including mainly carbon is formed. The structure shown above provides extremely higher mechanical properties of which strength at 1600°C is 80% or more of the room temperature strength.

The inorganic fibers described above are formed in an orientated state similar to the stacked state of sheets paralleled in one direction, an orientated state similar to the stacked state of three-dimensional fabrics, an orientated state similar to the state of three-dimensional fabrics or a random orientated state, or a mixed-structure thereof. These are selected for a while in accordance with the mechanical properties required for the target shape.

The surface of a part (a surface portion) of the gradient-structured SiC fiber-bonded ceramic has a monolithic ceramic structure mainly including the sintered structure of SiC, and contains, in some cases, 0.01-1 wt.% of oxygen and at least one metal atom selected from the group including metal atoms in Groups 2A, 3A, and 3B.

SiC in the surface portion mainly includes a polycrystalline sintered structure of β-SiC, or includes crystalline particulates of β-SiC and C. In a region containing a fine crystal of carbon (C) and/or an extremely small amount of oxygen (O), where β-SiC crystal grains sinter together without grain boundary second phase interposed therebetween, a strong bond between SiC crystals can be obtained. If fracture occurs in the fibers, it proceeds within crystal grains of SiC in at least 30% or more of the region. Depending on the case, an intergranular fracture region between SiC crystals and an intragranular fracture region may be present in mixture.

In a part of a SiC fiber-bonded ceramic with a graded structure, boundaries between the surface portion including mainly SiC ceramics and the matrix including the inorganic fibers and the interfacial layer are not clear, and such matrix including the inorganic fibers and the interfacial layer can be identified gradually toward the inside.

Next, a method for the production of (A) a SiC fiber-bonded ceramic and (B) a graded structural SiC fiber-bonded ceramic used in the present invention is explained. The steps of from the first step (a) to the fourth step (d) described below are the same for these two kinds of ceramics, but the fifth step is different ((e1): (A) SiC fiber-bonded ceramics; (e2): (B) graded structural SiC fiber-bonded ceramics).

This production method includes (a) a first step of adding at least one metal element selected from the group including metal elements in Groups 2A, 3A, and 3B, to a polysilane or its heating reaction product wherein the molar ratio of the carbon atom to the silicon atom is equal to or more than 1.5, thereby to prepare a metal element-containing oragnosilicon polymer, (b) a second step of melt spinning the metal element-containing oragnosilicon polymer, thereby to obtain a spun fiber, (c) a third step of heating the spun fiber at 50 to 170°C under an oxygen-containing atmosphere, thereby to prepare an infusibilized fiber, (d) a fourth step of inorganizing the infusibilized fiber in an inert gas, and (e1) a fifth step of placing a preform of the inorganic fibers obtained in the fourth step having at least one kind of shapes including fabrics, sheets obtained by orienting the fibers in one direction, fiber bundles, or chopped short fibers, in a predetermined shape of a carbon die, and hot-pressing the preform at a temperature range of 1700 to 2200°C under a pressure of 100 to 1000 kg/cm² in at least one atmosphere selected from the group including vacuum, inert gas, reducing gas and hydrocarbons, or (e2) a fifth step of placing a preform of the inorganic fibers obtained in the fourth step having at least one kind of shapes including fabrics, sheets obtained by orienting the fibers, in one direction, fiber bundles, or chopped short fibers, in a predetermined shape of a carbon die, so that the whole or partial surface of the preform is contacted with a powdery and/or porous inorganic substance, and hot-pressing the preform at a temperature range of 1700 to 2200°C under a pressure of 100 to 1000 kg/cm² in at least one atmosphere selected from the group including vacuum, inert gas, reducing gas and hydrocarbons.

### First Step

In the first step, a metal element-containing organosilicon polymer, which is a precursor polymer, is prepared. The polysilane used in the first step is a linear or cyclic polymer obtained by dechlorinating one or more kinds of dichlorosilanes by using sodium according to the method described in, for example, "Chemistry of Organosilicon Compound" published by KAGAKUDOJIN (1972). The number average molecular weight of the polysilane is normally 300 to 1000. This polysilane can have a hydrogen atom, lower alkyl group, phenyl group, or silyl group as a side chain of silicon. In any case, it is necessary that the molar ratio of carbon atoms with respect to silicon atoms be 1.5 or more. If such condition is not satisfied, all the carbon atoms in the fiber together with oxygen introduced from infusibilizing are eliminated in the form of carbon dioxide gas during the process of temperature elevation up to sintering, which makes it difficult for interfacial carbon layers to be formed between the fibers, and this is unfavorable.

Instead of polysilane used in the first step, a heating reaction product of polysilane may be used. The heating reaction product of polysilane includes an organosilicon polymer containing a carbosilane bond in part in addition to a polysilane bond unit obtained by heating the aforementioned linear or cyclic polysilane. Such an organosilicon polymer can be prepared by known methods per se. Examples of preparation methods include a method of causing a heating reaction of a linear or cyclic polysilane at a relatively high temperature of 400 to 700°C, a method of adding a phenyl group-containing polyborosiloxane to this polysilane and causing a heating reaction of the resultant at a relatively low temperature of 250 to 500°C, and the like. The number average molecular weight of the organosilicon polymer obtained in this way is normally 1000 to 5000.

The phenyl group-containing polyborosiloxane can be prepared according to the methods described in JP-A No. 53-42300 and JP-A No. 53-50299. For example, the phenyl group-containing polyborosiloxane can be prepared by a condensation reaction between boric acid and one or more kinds of diorganochlorosilane for removing hydrochloric acid. The number average molecular weight of the phenyl group-containing polyborosiloxane is normally 500 to 10000. The amount of the phenyl group-containing polyborosiloxane to be added is normally 15 parts by weight or less with respect to 100 parts by weight of the polysilane.

A predetermined amount of a compound that contains Group 2A, Group 3A, and Group 3B metal elements is added to polysilane, and the mixture is reacted in an inert gas at a temperature of normally 250 to 350°C for 1 to 10 hours, thereby to prepare a metal element-containing organosilicon polymer to be used as a raw material. The metal element described above is used at a ratio at which the content of the metal element in the sintered SiC fiber-bonded material to be obtained finally will become 0.05 to 4.0% by weight. A specific ratio of such metal content can be determined arbitrarily by those skilled in the art in accordance with the teachings of the present invention. In addition, the metal element-containing organosilicon polymer described above is a cross-linked polymer having a structure in which at least some of silicon atoms of polysilane are linked to a metal atom via or not via an oxygen atom.

The compound to be added in the first step, which contains Group 2A, Group 3A, and Group 3B metal elements may be alkoxides, acetylacetoxide compounds, carbonyl compounds, cyclopentadienyl compounds, etc. of the metal elements described above. Specifically, such compound may include beryllium acetylacetonate, magnesium acetylacetonate, yttrium acetylacetonate, cerium acetylacetonate, boric acid butoxide, aluminum acetylacetonate, etc. Any of these compounds can produce a structure in which each of metal elements is bonded to Si directly or via another element by the reaction with a Si-H bond in an organosilicon polymer that is produced when the compound reacts with polysilane or its heating reaction product.

### Second Step

In the second step, a spun fiber of the metal element-containing organosilicon polymer is obtained. A spun fiber can be obtained by spinning the metal element-containing organosilicon polymer which is a precursor polymer according to known methods per se such as melt-spinning, dry-spinning, etc.

### Third Step

In the third step, an infusibilized fiber is prepared by heating the spun fiber in an oxygen-containing atmosphere at 50 to 170°C. The purpose of infusibilizing is to form cross-linkages of oxygen atoms between polymer constituting the spun fiber to ensure that the infusibilized fiber will not melt and fusion-bonding of adjoining fiber components will not occur in the next step of inorganization. The gas constituting the oxygen-containing atmosphere may be air, oxygen, and ozone. The infusibilizing temperature is 50 to 170°C, and the infusibilizing time is dependent on the infusibilizing temperature, but it is normally several minutes to 30 hours. It is preferable to control the content of oxygen in the infusibilized fiber to be 8 to 16% by weight. A large part of this oxygen will remain in the fiber even after the next inorganization step to serve an important function of eliminating any excess carbon in the inorganic fiber as CO gas in the process of temperature elevation up to final sintering. If the oxygen content is less than 8% by weight, excess carbon in the inorganic fiber will remain in a more than necessary amount and become stabilized by segregating around the SiC crystal during the temperature elevation to thereby inhibit the β-SiC crystals from being sintered without grain boundary second phase interposed therebetween. Where the oxygen content is more than 16% by weight, excess carbon in the inorganic fiber will completely be eliminated to thereby inhibit production of interfacial carbon layers between fiber components. Both of the cases are unfavorable because the mechanical properties of the material to be obtained will be damaged.

It is preferred that the infusibilized fiber described above be further preheated in an inert atmosphere. The gas constituting the inert atmosphere may be nitrogen, argon, etc. The heating temperature is normally 150 to 800°C, and the heating time is several minutes to 20 hours. Preheating the infusibilized fiber in an inert atmosphere can further promote the cross-linking reaction of the polymer constituting the fiber while preventing oxygen inclusion into the fiber, and can thus improve the strength of the fiber while maintaining excellent elongation of the infusibilized fiber from the precursor polymer. This makes it possible to carry out the next inorganization step stably and with high work efficiency.

### Fourth Step

In the fourth step, inorganization is carried out by heating the infusibilized fiber continuously or batch-wise in an inert gas atmosphere such as argon at a temperature in the range of 1000 to 1700°C.

Fifth Step (In the case of (A) SiC fiber-bonded ceramic) The infusibilized fiber obtained in the third step or the inorganic fiber obtained in the fourth step is made into a preform having a predetermined shape, including at least one kind of shape including fabrics, sheets obtained by orienting the fibers in one direction, fiber bundles, or chopped short fibers, for example, and the preform is placed in a predetermined shape of a carbon die, and heated at a temperature range of 1700 to 2200°C in an atmosphere including at least one of vacuum, inert gas, reducing gas and hydrocarbons. After the heating, (A) a SiC fiber-bonded ceramic can be produced by pressure treatment at a pressure ranging from 100 to 1000 kg/cm². In order to discharge the carbon on the surface portion of the preform as CO or SiO gas after the heating, it is preferred to perform the pressure treatment after a certain period of time while maintaining the preform at that temperature. The time to maintain the preform at that temperature is determined, depending on the size and kind of the preform and the rate of temperature rise, etc.

### Fifth Step (In the case of (B) graded structural SiC fiber-bonded ceramic)

The infusibilized fiber obtained in the third step or the inorganic fiber obtained in the fourth step is made into a preform having a predetermined shape, including at least one kind of shape including fabrics, sheets obtained by orienting the fibers in one direction, fiber bundles, or chopped short fibers, for example, and the preform is placed in a predetermined shape of a carbon die so that at least a part of the surface of the preform will be in contact with at least one of powder form and porous form of the inorganic material, followed by heating at a temperature range of 1700 to 2200°C in an atmosphere including at least one of vacuum, inert gas, reducing gas, and hydrocarbons. After the heating, (B) a graded structural SiC fiber-bonded ceramic can be produced by pressure treatment at a pressure ranging from 100 to 1000 kg/cm². In order to discharge the carbon on the surface portion of the preform as CO or SiO gas after the heating, it is preferred to perform the pressure treatment after a certain period of time while maintaining the preform at that temperature. The time to maintain the preform at that temperature is determined, depending on the size and kind of the preform and the rate of temperature rise, etc.

There is no particular limitation to powdered or porous inorganic materials described above as long as they do not affect the performance of parts after molding, and examples of such inorganic materials include primarily carbon, BN, and the like. In addition, the shape and size of this inorganic material can be appropriately selected depending on the shape of parts, and the formation condition of the desired surface of the SiC ceramics. For example, if a deep formation layer of the SiC surface is desired, a powder having a large average particle diameter is chosen. The part where the preform contacts with the inorganic material becomes the surface portion including mainly a SiC ceramic, and a boundary portion having a graded structural portion that gradually changes inside from the surface portion to the structure of the matrix is formed.

### Example

The present invention will be described below by way of Example. First, an evaluation method in a high-speed combustion gas stream at high temperature will be shown.

### [Erosion Test]

Using an erosion test apparatus of arc heating system produced by IHI Corporation, the erosion test was carried out for 200 seconds under the conditions of nozzle diameter 75 mm, distance from the nozzle 35 mm, flow rate of combustion gas (simulated air) 50 L/min, and current 180 A. When the heating rate was measured with a Gardon gauge under these conditions, it was found to be 2.6 MW/m². The surface temperature of the sample was measured diagonally from above the sample with a radiation thermometer that had been set up to a sight glass attached to the top of the nozzle where combustion gas was being injected.

### Example 1

First, 1L of dimethyldichlorosilane was added dropwise into an anhydrous xylene containing 400 g of sodium while heating and refluxing anhydrous xylene in a nitrogen gas stream, followed by heating under reflux for 10 hours to yield a precipitate. This precipitate was filtered and washed with methanol and then with water to obtain 420 g of a white polydimethylsilane. Then, 750 g of diphenyldichlorosilane and 124 g of boric acid were heated in n-butyl ether under a nitrogen gas atmosphere at 100-120°C and the resultant white resinous product was heat-treated in vacuum at 400°C for one hour to obtain 530 g of a phenyl group-containing polyborosiloxane.

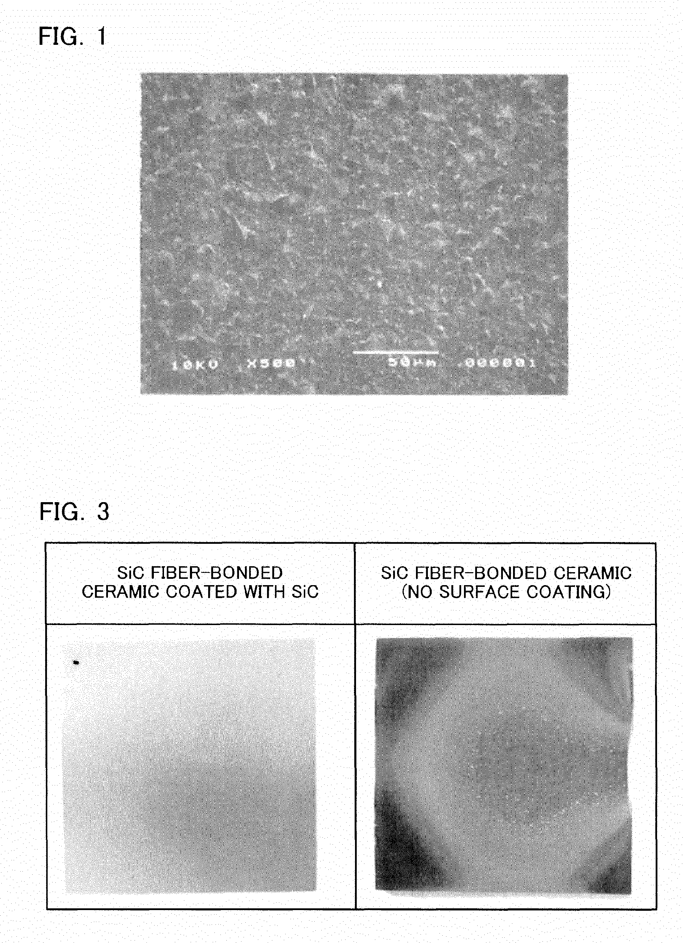

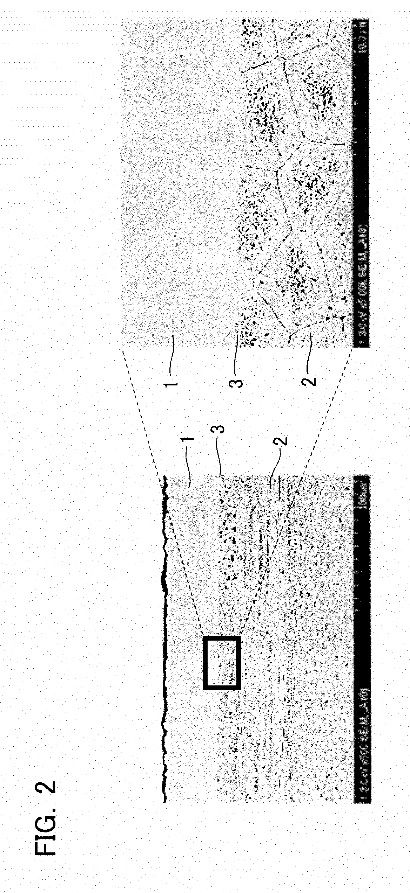

Four parts of the phenyl group-containing polyborosiloxane were added to 100 parts of the polydimethylsilane obtained above, and the mixture was thermally condensed under a nitrogen gas atmosphere at 350°C for 5 hours to obtain an organosilicon polymer having a high molecular weight. Into a solution of 100 parts of the organosilicon polymer dissolved in xylene were added 7 parts of aluminum tri-(sec-butoxide), and crosslinking reaction was carried out in a nitrogen gas stream at 310°C to synthesize a polyaluminocarbosilane. This is melt spun at 245°C, then heat-treated in the air at 140°C for 5 hours, and further heated in nitrogen at 300°C for 10 hours to obtain infusibilized fibers. The infusibilized fibers were continuously fired in nitrogen at 1500°C to synthesize silicon carbide-based continuous inorganic fibers. Next, a satin fabric sheet of the inorganic fibers was formed and then cut into pieces of 89 mm × 89 mm, of which 150 pieces were stacked and set in a carbon die of 90 mm × 90 mm, where a hot press molding was carried out at a temperature of 1900°C under a pressure of 50 MPa in an argon atmosphere. A SiC fiber-bonded ceramic coated with SiC was synthesized by collecting a board of 30 mm × 30 mm × 1.5 mm t from the obtained SiC fiber-bonded ceramic, followed by coating with SiC having a film thickness of 40 µm by the CVD apparatus using silane (SiH₄) and propane (C₃H₈) as a raw material gas and hydrogen (H₂) as a carrier gas. Figure 1 shows the observation results of the surface of the obtained SiC fiber-bonded ceramic coated with SiC, by an optical microscope, and Figure 2 shows the observation results of its cross-section by a scanning electron microscope. In Figure 2, the reference numeral 1 is a SiC coating layer, the reference numeral 2 is a SiC fiber-bonded ceramic, and the reference numeral 3 is a boundary portion between the SiC coating layer and the SiC fiber-bonded ceramic. From Figure 1, it is understood that there are no defects such as cracks and pinholes in SiC which is coated on the surface of the SiC fiber-bonded ceramic, as well as no peeling of the SiC film. In addition, it was confirmed from Figure 2 that there are no changes in the structure of the SiC fiber-bonded ceramic beneath the coating and the internal structure, and also no deterioration in the SiC fiber-bonded ceramic by coating with SiC. And the erosion tests of SiC fiber-bonded ceramics coated with SiC and uncoated SiC fiber-bonded ceramics were carried out, and weight changes and surface conditions before and after the tests were observed.

Table 1 shows the conditions and results of the erosion tests. The weight loss rate after the erosion test of SiC fiber-bonded ceramic coated with SiC on the surface is very small compared to the weight loss rate of SiC fiber-bonded ceramic that was not coated with SiC. Figure 3 shows the surface condition of the sample after the erosion test of SiC fiber-bonded ceramic coated with SiC on the surface. On the surface of the SiC fiber-bonded ceramic coated with SiC, there is no trace of gas flow due to the erosion test.

**[Table 1]**

| Sample | Current (A) | Nozzle distance (mm) | Heating rate (MW/m²) | Surface temperature (°C) | Weight loss rate (%) |
|---|---|---|---|---|---|
| SiC fiber-bonded ceramic coated with SiC | 180 | 35 | 2.6 | 1720 | -0.8 |
| SiC fiber-bonded ceramic (uncoated) | | | | 1710 | -19.25 |

### Reference Signs List

- 1: SiC coating layer
- 2: SiC fiber-bonded ceramic
- 3: Boundary between SiC coating layer and SiC fiber-bonded ceramic

## Claims

1. A SiC fiber-bonded ceramic coated with SiC, which is **characterized by** being obtained by coating the surface of a SiC fiber-bonded ceramic with use of a coating layer comprising mainly SiC, the SiC fiber-bonded ceramic comprising inorganic fibers having mainly a sintered SiC structure, each of which contains 0.01-1 wt.% of oxygen (O) and at least one or more metal atoms of metal atoms in Groups 2A, 3A, and 3B, and a 1-100 nm interfacial layer containing carbon (C) as a main component formed between the fibers.

2. A SiC fiber-bonded ceramic coated with SiC comprising: a matrix comprising inorganic fibers mainly having a sintered SiC structure, each of which contains 0.01-1 wt.% of oxygen (O) and at least one or more metal atoms of metal atoms in Groups 2A, 3A, and 3B, and a 1-100 nm interfacial layer containing carbon (C) as a main component formed between the fibers;
a surface portion having a ceramic structure that contains mainly SiC and is formed on at least a part of the surface of the matrix; and
a boundary portion interposed between the surface portion and the matrix and having a graded structure that changes from the structure of the matrix to the structure of the surface portion gradually and continuously, which is **characterized in that** the surface of the SiC fiber-bonded ceramic is coated with a coating layer comprising mainly SiC.

3. The SiC fiber-bonded ceramic coated with SiC according to claim 1 or 2, **characterized in that** the surface roughness after the SiC coating without grinding chemically and physically is equal to or less than Rmax = 10 µm and a variation in film thickness of the SiC coating layer is equal to or less than 50 µm.
